# EUROPEAN PATENT SPECIFICATION

(11) **EP 3 677 515 B1**
(45) Date of publication and mention of the grant of the patent: **28.07.2021**
(21) Application number: 20150287.9
(22) Date of filing: 03.01.2020
(51) Int. Cl.: B64D 45/04, B64D 47/02, G08G 5/00

(54) **SYSTEMS AND METHODS FOR OPTIMIZING LANDING LIGHTS OPERATION ONBOARD AN AIRCRAFT**
SYSTEME UND VERFAHREN ZUM OPTIMIEREN DES LANDELICHTBETRIEBS AN BORD EINES FLUGZEUGS
SYSTÈMES ET PROCÉDÉS POUR OPTIMISER LE FONCTIONNEMENT DE FEUX D'ATTERRISSAGE À BORD D'UN AÉRONEF

(30) Priority: 07.01.2019 US 201916241330
(43) Date of publication of application: 08.07.2020
(73) Proprietor: Honeywell International Inc., Morris Plains, NJ 07950 (US)
(72) Inventor: KHAN, Kalimulla, Morris Plains, NJ 07950 (US); JAYATHIRTHA, Srihari, Morris Plains, NJ 07950 (US); SHAMASUNDAR, Raghu, Morris Plains, NJ 07950 (US); KIROV, Chavdar, Morris Plains, NJ 07950 (US); MARKOV, Ivan, Morris Plains, NJ 07950 (US)
(74) Representative: LKGlobal UK Ltd.

(56) References cited:
- EP-A2- 3 007 153
- US-B1- 9 643 736

## Description

### TECHNICAL FIELD

Embodiments of the subject matter described herein relate generally to the operation of landing lights onboard an aircraft during flight. More particularly, embodiments of the subject matter relate to optimizing the use of landing lights to achieve increased flight efficiency.

### BACKGROUND

Landing lights are lights mounted on an aircraft that illuminate the terrain and runway ahead of the aircraft during takeoff and landing. Due to their brightness, landing lights are also used for increasing visibility of a first aircraft to other aircraft in close proximity, thus mitigating risk of collision in a crowded airspace. Landing lights may be positioned on the aircraft using several configurations, and such positioning may include external type landing lights and wing-rooted type landing lights. In many common aircraft types, the wing-rooted landing lights are extended out of the clean aerodynamic surfaces of the wing when operational, and are retracted when not operational. Thus, the positioning of the landing lights may disturb the airflow and add some amount of drag to the aircraft during flight. To maintain a given aircraft speed during use of the landing lights, a slightly increased thrust is required, which results in an increased fuel flow. Document EP3007153 discloses a systems and method for processing aircraft flight information and flight plan information. Specific techniques are described for managing flight data in real time, sharing flight data between a plurality of systems, dynamically managing flight information, generating flight plan information, providing flight plan information to a user, and closing flight plan discontinuities. Document US9643736 discloses a landing light system and steering method and computer readable medium. A landing light system includes a camera, a controller, and a landing light. A tangible, non-transitory memory may have instructions for controlling a landing light. The controller may perform operations including receiving a first image at a first time from the camera, receiving a second image at a second time from the camera, estimating a focus of expansion between the first image and the second image, and aiming the landing light based on the focus of expansion.

Accordingly, it is desirable to manage operation of the landing lights to accommodate flight requirements. Furthermore, other desirable features and characteristics will become apparent from the subsequent detailed description and the appended claims, taken in conjunction with the accompanying drawings and the foregoing technical field and background.

### BRIEF SUMMARY

According to an embodiment of the present invention, and as claimed in claim 1, a method for providing landing lights operation data during a flight of an aircraft, by a computing device comprising at least one processor and a system memory element is provided. The method obtains a standard operating procedure (SOP) for operating landing lights onboard the aircraft during the flight, by the at least one processor, wherein the SOP comprises a customary industry-recommended practice for at least one of extension and retraction of the landing lights on the aircraft, and wherein execution of the SOP produces a flight efficiency level including at least fuel burn and drag parameters; determines an optimized operating procedure for the landing lights to increase the flight efficiency level to achieve an increased flight efficiency level, by the at least one processor, based on real-time contextual data; and presents an advisory comprising at least graphical elements associated with the optimized operating procedure, a potential cost savings for the optimized operating procedure, and the increased flight efficiency level onboard the aircraft, via a display device communicatively coupled to the at least one processor.

According to another embodiment of the present invention, and as claimed in claim 11, a computing device for providing landing lights operation data during a flight of an aircraft is provided. The computing device includes: a system memory element; a display device configured to present graphical elements and text onboard the aircraft; and at least one processor communicatively coupled to the system memory element and the display device, the at least one processor configured to: obtain a standard operating procedure (SOP) for operating landing lights onboard the aircraft during the flight, wherein the SOP comprises a customary industry-recommended practice for at least one of extension and retraction of the landing lights on the aircraft, and wherein execution of the SOP produces a flight efficiency level including at least fuel burn and drag parameters; determine an optimized operating procedure for the landing lights to increase the flight efficiency level to achieve an increased flight efficiency level, based on real-time contextual data; and present an advisory comprising at least graphical elements associated with the optimized operating procedure, a potential cost savings for the optimized operating procedure, and the increased flight efficiency level onboard the aircraft, via the display device.

Some embodiments of the present disclosure provide a non-transitory, computer-readable medium containing instructions thereon, which, when executed by a processor, perform a method for providing landing lights operation data during a flight of an aircraft, by a computing device comprising at least one processor and a system memory element. The method obtains a standard operating procedure (SOP) for operating landing lights onboard the aircraft during the flight, by the processor, wherein the SOP comprises a customary industry-recommended practice for at least one of extension and retraction of the landing lights on the aircraft, and wherein the SOP produces a flight efficiency level including at least fuel burn and drag parameters; determines an optimized operating procedure for the landing lights to increase the flight efficiency level to achieve an increased flight efficiency level, by the processor, based on real-time contextual data, by: creating a tail number-specific performance model of the aircraft, by the processor, based on the real-time contextual data, aircraft data, a current aircraft state, a current aircraft trajectory, and visibility requirements at a plurality of altitude levels of the current aircraft trajectory; and calculating an optimal altitude value for operating the landing lights to achieve the increased flight efficiency level, based on the tail number-specific performance model, by the processor, wherein the optimized operating procedure comprises operating the landing lights at the optimal altitude value. The method then presents an advisory comprising at least graphical elements associated with the optimal altitude value and the increased flight efficiency level onboard the aircraft, via a display device communicatively coupled to the processor.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a landing lights optimization system, in accordance with the disclosed embodiments;
FIG. 2 is a functional block diagram of a computing device, in accordance with the disclosed embodiments;
FIGS. 3A-3C are diagrams of exemplary embodiments of landing light configurations onboard various aircraft;
FIG. 4 is a diagram of a landing lights optimization display, in accordance with the disclosed embodiments;
FIG. 5 is a flow chart that illustrates an embodiment of a process for providing landing lights operation data during a flight of an aircraft, in accordance with the disclosed embodiments;
FIG. 6 is a flow chart that illustrates an embodiment of a process for determining an optimized operating procedure for the landing lights to increase the flight efficiency level to achieve an increased flight efficiency level, in accordance with the disclosed embodiments;
FIG. 7 is a flow chart that illustrates an embodiment of a process for presenting real-time alerts for an optimized operating procedure onboard the aircraft, in accordance with the disclosed embodiments; and
FIG. 8 is a flow chart that illustrates an embodiment of a process for providing updated landing lights data onboard the aircraft, in accordance with the disclosed embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to systems and methods for optimizing operation of the landing lights onboard an aircraft to increase flight efficiency during landing. More specifically, the subject matter relates to obtaining recommendations and standard operating procedures for landing light operation, dynamically obtaining flight data, in real-time, and determining the most flight efficient altitude to deploy the landing lights for a particular type of aircraft. Also contemplated herein are presentation and alerting methods for the optimized landing lights operational procedures.

Certain terminologies are used with regard to the various embodiments of the present disclosure. Landing lights include any designated aircraft-mounted lights that illuminate the terrain and runway ahead of the aircraft during takeoff and landing. Flight efficiency is the ability to complete flight operations with the lowest possible quantity of waste, wherein flight efficiency factors include fuel burn, aircraft performance parameters, and drag parameters. The purpose of flight efficiency is to achieve the lowest possible quantity of fuel burn by reducing the quantity of drag, thereby reducing the cost of operation. Flight efficiency relates the landing lights operation in that the extension of the landing lights decreases fuel efficiency by increasing fuel burn when extended, and increases a drag force opposing operation of the aircraft when extended. Aircraft Parameter in this context is Fuel which will increase during extension of landing lights.] Operating procedures for landing lights include instructions for extending and retracting the landing lights at particular altitude levels, during landing or takeoff of an aircraft. Standard operating procedures (SOPs) for landing light operation include customary and accepted instructions for operating the landing lights at industry-recommended altitude values.

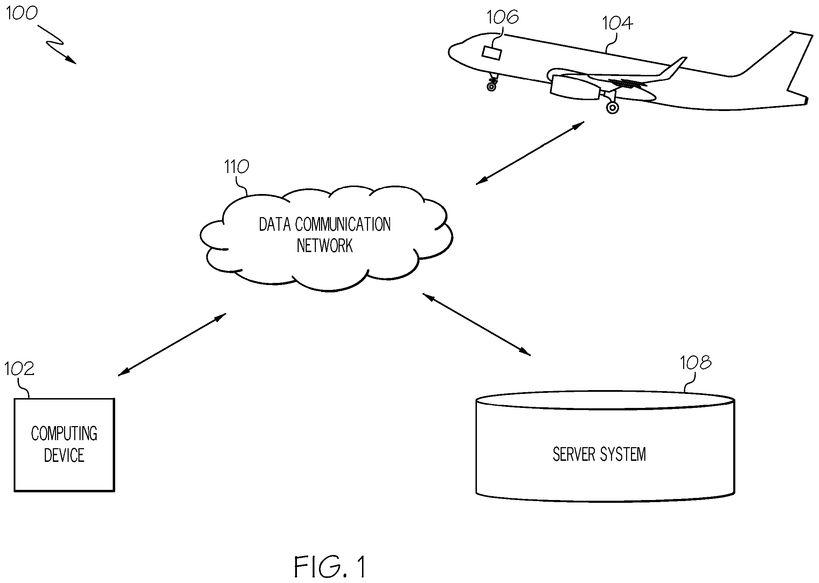

Turning now to the figures, FIG. 1 is a diagram of a landing lights optimization system, in accordance with the disclosed embodiments. The landing lights optimization system 100 operates to compute and present dynamic, real-time, recommendations for operation of the landing lights onboard an aircraft 104 during flight. The landing lights optimization system 100 may include, without limitation, a computing device 102 that communicates with one or more avionics systems 106 onboard the aircraft 104 and at least one server system 108, via a data communication network 110. In practice, certain embodiments of the landing lights optimization system 100 may include additional or alternative elements and components, as desired for the particular application.

The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to determine and present recommendations and alerts for landing lights optimization. In other embodiments, the computing device 102 may be implemented using a computer system onboard the aircraft 104, which is configured to determine and present recommendations and alerts for landing lights optimization.

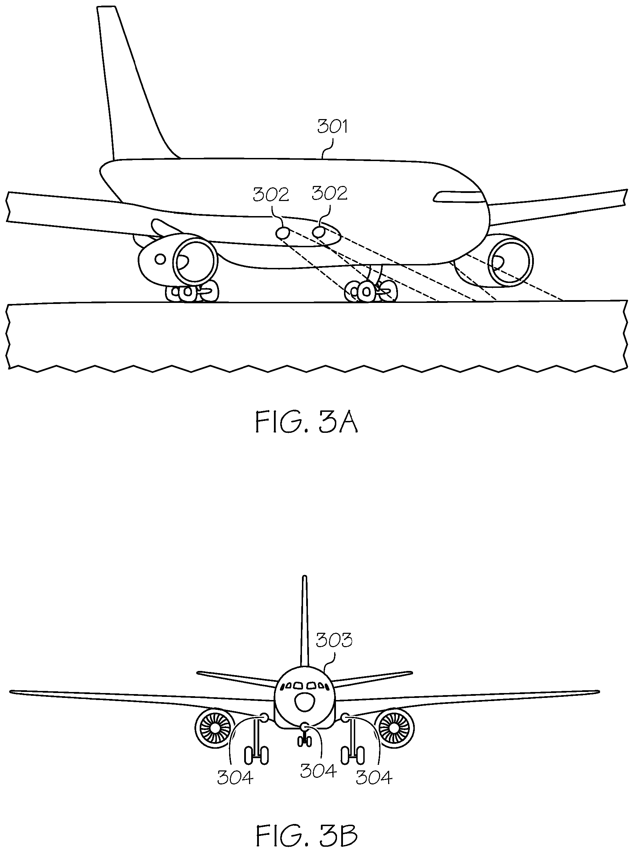

The aircraft 104 may be any aviation vehicle for which landing lights optimization recommendations are relevant and applicable during completion of a flight route. More specifically, the aircraft 104 may be any aircraft 104 that uses a set of one or more retractable landing lights at any time during flight, in any configuration (see FIGS. 3A-3C). The aircraft 104 may be implemented as an airplane, helicopter, spacecraft, hovercraft, or the like. The one or more avionics systems 106 may include a Flight Management System (FMS), Automatic Dependent Surveillance - Broadcast (ADS-B) devices, navigation devices, weather radar, brake systems, or the like. Data obtained from the one or more avionics systems 106 may include, without limitation: an aircraft trajectory, a current aircraft state, flight plan data, or the like.

The server system 108 is representative of any remote servers storing cloud-based data used to compute landing lights optimization recommendations and alerts. In this way, the server system 108 may represent any of the following, without limitation: weather data sources, air traffic data sources, aircraft visibility data sources, wind data sources, landing lights key performance indicators (KPIs) data sources, fuel efficiency and flight efficiency data sources, or the like. The server system 108 may include any number of application servers, and each server may be implemented using any suitable computer. In some embodiments, the server system 108 includes one or more dedicated computers. In some embodiments, the server system 108 includes one or more computers carrying out other functionality in addition to server operations. The server system 108 may store and provide any type of data used to calculate landing lights optimization recommendations. Such data may include, without limitation: flight data, weather data, traffic data, visibility data, wind data, airport data, Notices to Airmen (NOTAMs) associated with the current aircraft trajectory, and other data compatible with the computing device 102.

The computing device 102 is usually located onboard the aircraft 104, and the computing device 102 communicates with the one or more avionics systems 106 via wired and/or wireless communication connection. The computing device 102 and the server system 108 are generally disparately located, and the computing device 102 communicates with the server system 108 via the data communication network 110 and/or via communication mechanisms onboard the aircraft 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the computing device 102 obtains relevant data associated with flight efficiency of the aircraft 104 from the one or more avionics systems 106 and the remote server system 108. The computing device 102 then uses the relevant data to compute landing lights optimization recommendations for a current flight of the aircraft 104, and presents the landing lights optimization recommendations such that a user (e.g., a flight crew member) can operate the landing lights according to the presented recommendations.

Landing lights onboard the aircraft 104 are generally operated according to industry-accepted standard operating procedures (SOPs). The computing device 102 is computes landing lights optimization recommendations that increase a flight efficiency level for operation of the aircraft 104, which includes improved efficiency for drag, fuel burn, and other aircraft parameters, including a reduction in an overall operating cost of the aircraft. During takeoff, the aircraft 104 activates the landing lights at a particular takeoff altitude value according to SOPs, but the computing device 102 optimizes the activation procedure by calculating an optimized altitude value that is different from the SOP altitude value to activate the landing lights. Generally, the new and optimized altitude value decreases the amount of time that the landing lights are extended and therefore activated, thus decreasing the time period of increased drag and fuel burn that is introduced by extended landing lights. Similarly, during landing, the aircraft 104 activates the landing lights at a particular descent altitude value according to SOPs, but the computing device 102 optimizes the activation procedure by calculating an optimized altitude value that is different from the SOP altitude value to deactivate the landing lights, based on visibility and traffic conditions. Like the optimized takeoff landing lights procedure, the optimized descent landing lights procedure decreases the amount of time that the landing lights are extended and therefore activated, thus decreasing the time period of increased drag and fuel burn that is introduced by extended landing lights. The computing device 102 is further configured to continuously and dynamically calculate and present updated landing lights optimization recommendations during flight. Such dynamic, real-time calculation of landing lights optimization recommendations considers updated, real-time data which may alter previously-calculated recommendations (e.g., recommendations calculated prior to the flight or at an earlier time during the flight).

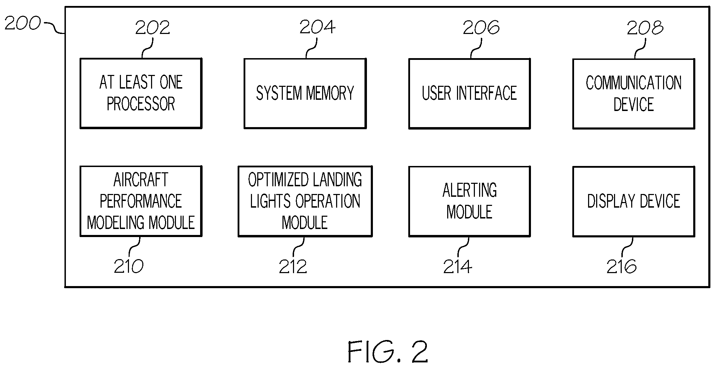

FIG. 2 is a functional block diagram of a computing device, in accordance with the disclosed embodiments. It should be noted that the computing device 200 can be implemented with the computing device 102 depicted in FIG. 1. In this regard, the computing device 200 shows certain elements and components of the computing device 200 in more detail. The computing device 200 generally includes, without limitation: at least one processor 202; system memory 204; a user interface 206; a communication device 208; an aircraft performance modeling module 210; an optimized landing lights operation module 212; an alerting module 214; and a display device 216. These elements and features of the computing device 200 may be operatively associated with one another, coupled to one another, or otherwise configured to cooperate with one another as needed to support the desired functionality - in particular, dynamically providing landing lights optimization recommendations and alerting onboard an aircraft during flight, as described herein. For ease of illustration and clarity, the various physical, electrical, and logical couplings and interconnections for these elements and features are not depicted in FIG. 2. Moreover, it should be appreciated that embodiments of the computing device 200 will include other elements, modules, and features that cooperate to support the desired functionality. For simplicity, FIG. 2 only depicts certain elements that relate to the landing lights optimization recommendation-generating techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with landing lights optimization recommendations and alerting, and graphical elements associated with the landing lights optimization recommendation and alerting system. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 200. For example, the user interface 206 could be manipulated by an operator to provide user requests for landing lights optimization recommendations and/or dynamically updated landing lights optimization recommendations during flight, as described herein.

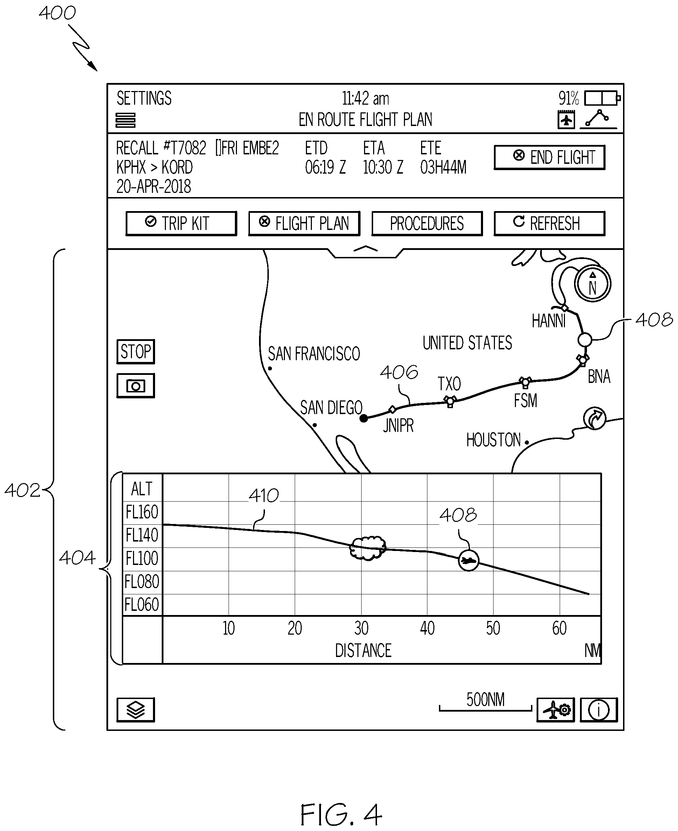

In certain embodiments, the user interface 206 may include or cooperate with various features to allow a user to interact with the computing device 200 via graphical elements rendered on a display element (e.g., the display device 216). Accordingly, the user interface 206 may initiate the creation, maintenance, and presentation of a graphical user interface (GUI). In certain embodiments, the display device 216 implements touch-sensitive technology for purposes of interacting with the GUI. Thus, a user can manipulate the GUI by moving a cursor symbol rendered on the display device 216, or by physically interacting with the display device 216 itself for recognition and interpretation, via the user interface 206. In one exemplary embodiment, such a user interface 206 may facilitate user interaction with an Electronic Flight Bag (EFB) application that is stored, maintained, executed, and presented by a computing device 200 implemented as a standalone personal computing device (e.g., a laptop computer, a tablet computer). One example of a GUI presented by an EFB application is described herein with regard to FIG. 4. In other embodiments, the GUI may be provided by an aircraft onboard avionics system that is configured to receive touchscreen input (via the user interface 206) and to display landing lights optimization data via the display device 216.

The communication device 208 is suitably configured to communicate data between the computing device 200 and one or more remote servers and one or more avionics systems onboard an aircraft. The communication device 208 may transmit and receive communications over a wireless local area network (WLAN), the Internet, a satellite uplink/downlink, a cellular network, a broadband network, a wide area network, or the like. As described in more detail below, data received by the communication device 208 may include, without limitation: a current aircraft trajectory, a current aircraft state, weather data, traffic data, visibility data, win data, airport data, aircraft information, Notices to Airmen (NOTAMs) associated with the current aircraft trajectory, flight plan data, and other data compatible with the computing device 200. Data provided by the communication device 208 may include, without limitation: requests for real-time contextual data, including requests applicable to one or more individual categories of real-time contextual data, and the like.

The aircraft performance modeling module 210 is configured to obtain real-time aircraft parameter data, dynamically and continuously throughout the flight, and to create a model of the aircraft performance based on the continuously updated aircraft parameter data. The dynamically created model of the aircraft performance computes the optimized altitude level for operating the landing lights using aircraft parameter data. The aircraft performance modeling module 210 uses the aircraft parameter data to compute the optimum altitude to operate the landing lights, as applied to landing performance and to takeoff performance. Applicable aircraft parameter data may include, without limitation: aircraft gross weight, fuel weight, aircraft configuration (e.g., flaps configuration, slat configuration), aircraft speed profile, aircraft altitude profile, and atmospheric conditions (e.g., wind data, temperature data).

The optimized landing lights operation module 212 is configured to use the aircraft performance model (created and updated throughout the flight by the aircraft performance modeling module 210) to determine recommendations to optimize operation of the landing lights. During descent, the optimized landing lights operation module 212 computes an optimized altitude value to deactivate the set of landing lights that have already been activated according to industry standard operating procedures (SOPs), based on traffic and visibility data at particular altitude levels and corresponding distance locations. Here, the optimized landing lights operation module 212 recommends that, at particular altitude levels, the visibility levels are high enough and the traffic levels are low enough that safety is not compromised by turning off the landing lights for a period of time to increase the flight efficiency. During takeoff, the optimized landing lights operation module 212 computes an optimized altitude value to activate the set of landing lights that have not been previously activated according to industry SOPs, based on traffic and visibility data at particular altitude levels and corresponding distance locations from the takeoff runway. Here, the optimized landing lights operation module 212 recommends activating the landing lights at an altitude value that is higher than the industry SOPs, when visibility levels are high enough and the traffic levels are low enough that safety is not compromised by leaving the landing lights in a deactivated state for a longer period of time than is typically used, to increase the flight efficiency.

The alerting module 214 is configured to provide real-time alerting onboard the aircraft, to inform flight crew members of an approaching action item related to landing lights operation onboard the aircraft. More specifically, the alerting module 214 provides real-time alerts when the aircraft is located within a predetermined threshold of an optimized altitude value for activating operation of the landing lights. The predetermined threshold is a configurable value. In some embodiments, the predetermined threshold for presenting real-time alerts is a user-configurable value, wherein the user may enter a time duration value, a distance value, and/or an altitude level at which the computing device 200 provides an auditory and/or visual alert to notify the flight crew that the recommended, optimized landing lights operation altitude is approaching. In some embodiments, the predetermined threshold for presenting real-time alerts is a developer-configurable value, wherein the computing device 200 is preconfigured during development with a time duration value, a distance value, and/or an altitude level at which the computing device 200 provides an auditory and/or visual alert to notify the flight crew that the recommended, optimized landing lights operation altitude is approaching.

In practice, the aircraft performance modeling module 210, the optimized landing lights operation module 212, and/or the alerting module 214 may be implemented with (or cooperate with) the at least one processor 202 to perform at least some of the functions and operations described in more detail herein. In this regard, the aircraft performance modeling module 210, the optimized landing lights operation module 212, and/or the alerting module 214 may be realized as suitably written processing logic, application program code, or the like.

The display device 216 is configured to display various icons, text, and/or graphical elements associated with landing lights optimization recommendations and alerting. In an exemplary embodiment, the display device 216 is communicatively coupled to the user interface 206 and the at least one processor 202. The at least one processor 202, the user interface 206, and the display device 216 are cooperatively configured to display, render, or otherwise convey one or more graphical representations or images associated with landing lights optimization recommendations and alerting on the display device 216, as described in greater detail below. In an exemplary embodiment, the display device 216 is realized as an electronic display configured to graphically display landing lights optimization recommendation data, as described herein. In some embodiments, the computing device 200 is an integrated computer system onboard an aircraft, and the display device 216 is located within a cockpit of the aircraft, and is thus implemented as an aircraft display. In other embodiments, the display device 216 is implemented as a display screen of a standalone, personal computing device (e.g., laptop computer, tablet computer). It will be appreciated that although the display device 216 may be implemented using a single display, certain embodiments may use additional displays (i.e., a plurality of displays) to accomplish the functionality of the display device 216 described herein.

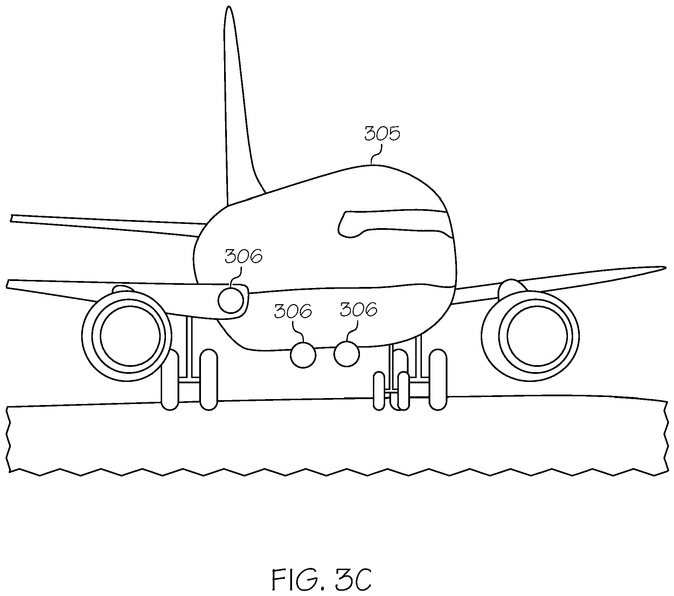

FIGS. 3A-3C are diagrams of exemplary embodiments of landing light configurations onboard various aircraft. The landing light configurations shown are applicable to the aircraft (see reference 104) AND the landing light optimization system (see reference 100) described previously with regard to FIG. 1. It should be noted that, although three different configurations of landing lights are shown, any configuration of retractable landing lights may be used for purposes of the landing lights optimization system (see reference 100, FIG. 1). In FIG. 3A, a first aircraft 301 has landing lights 302 positioned on the front of each of the wings. In FIG. 3B, a second aircraft 303 has landing lights 304 positioned underneath the main body of the second aircraft 303. In FIG. 3C, a third aircraft 305 has landing lights 306 positioned underneath the main body of the third aircraft 305 and on the front of each of the wings.

FIG. 4 is a diagram of a landing lights optimization display 400, in accordance with the disclosed embodiments. In practice, an embodiment of the landing lights optimization display 400 may include additional or alternative elements and components, as desired for the particular application. For example, additional graphical components, windows, and/or interfaces may be employed without departing from the scope of the present disclosure. In some embodiments, the landing lights optimization display 400 may be implemented as a graphical user interface (GUI) presented by an aircraft onboard display, such as an avionics display, configured to provide landing lights optimization data during flight. In some embodiments, the landing lights optimization display 400 may be implemented as a graphical user interface (GUI) presented by a display of a personal computing device (e.g., a tablet computer, a laptop computer) configured to store, maintain, and execute an Electronic Flight Bag (EFB) application for providing landing lights optimization data during flight.

As shown, the landing lights optimization display 400 includes a flight plan display 402 and a vertical display 404. The flight plan display 402 is a map display that includes graphical elements representing a geographic area and a flight route 406 that includes a plurality of waypoints, from a departure location to an arrival location of the geographic area. The flight route 406 also includes a landing lights optimization point 408, which is a location point at which the computing device (see FIG. 2, reference 200) recommends operating the landing lights to increase the flight efficiency level. Typically, the computing device presents an advisory to recommend the landing lights optimization point 408 via the landing lights optimization display 400, such that the flight crew is notified of the location at which operating the landing lights is recommended for performance. The vertical display 404 is a graphical plot of distance values by altitude values, which includes graphical elements representative of a descent trajectory 410 and the landing lights optimization point 408. Like the graphical elements presented by the flight plan display 402, the vertical display 404 presents the landing lights optimization point 408 as a location point at which the computing device (see FIG. 2, reference 200) recommends operating the landing lights to increase the flight efficiency level.

It should be noted that the flight plan display 402 and the vertical display 404 present two different views of the same landing lights optimization point 408. In this way, the flight plan display 402 presents the landing lights optimization point 408 as a location on the flight route 406, which is a lateral distance location as it relates to the flight route locations, including a departure location point, an arrival location point, and a plurality of waypoints between the departure location point and the arrival location point. In contrast, the vertical display 404 presents the landing lights optimization point 408 as a location on the vertical descent trajectory 410, which is a vertical distance location as it relates to a plurality of altitude values. Thus, the flight plan display 402 and the vertical display 404 present differing views of the same landing lights optimization point 408, to facilitate increased situational awareness.

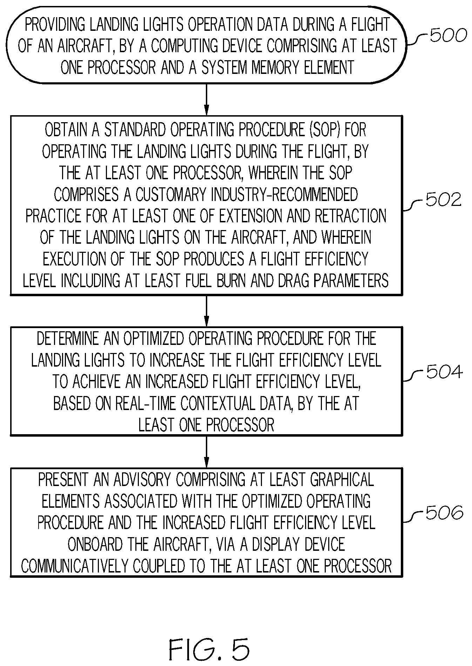

FIG. 5 is a flow chart that illustrates an embodiment of a process 500 for providing landing lights operation data during a flight of an aircraft, in accordance with the disclosed embodiments. First, the process 500 obtain a standard operating procedure (SOP) for operating the landing lights during the flight, by the at least one processor (step 502). The standard operating procedure comprises a customary industry-recommended practice for at least one of extension and retraction of the landing lights on the aircraft. The process 500 may obtain the standard operating procedures (SOPs) from a remote server system in real-time during flight, as needed, or the process 500 may access a previously-stored set of SOPs in a system memory element of a computing device onboard the aircraft. The generally-accepted SOPs may include altitude recommendations for landing light extension and landing light retraction, based on aircraft type. The SOPs provide guidelines for the operation of the landing lights, typically for airliners (i.e., an aircraft operated by a commercial airline). Typical SOPs are defined based on aircraft type, airport, weather condition, season, and time of day. Execution of the SOP produces a flight efficiency level including at least fuel burn and drag parameters. Thus, the flight efficiency includes not only fuel savings and improving fuel burn, but also includes improving drag parameters. Additionally, an overall operating cost for the aircraft is reduced.

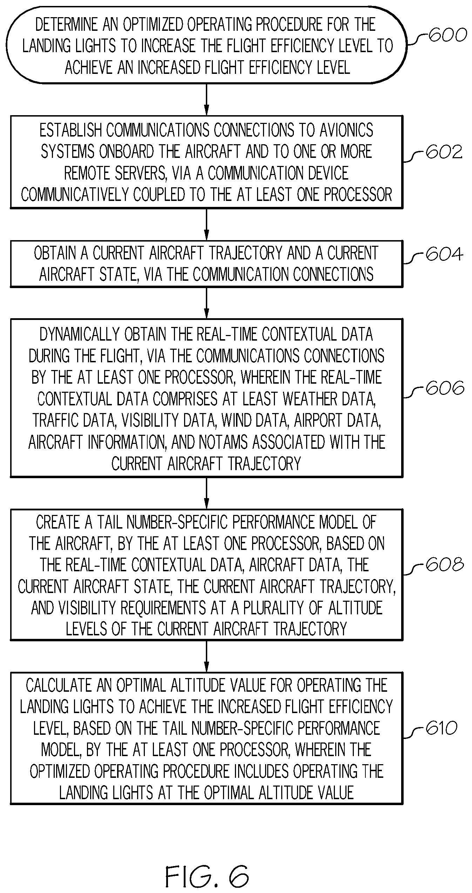

The process 500 determines an optimized operating procedure for the landing lights to increase the flight efficiency level to achieve an increased flight efficiency level, based on real-time contextual data, by the at least one processor (step 504). One suitable methodology for determining an optimized operating procedure for the landing lights to increase the flight efficiency level is described below with reference to FIG. 6. Here, the process 500 determines a time and/or location point during a current flight to extend and/or retract the landing lights to achieve a maximum level of flight efficiency that includes a maximum fuel efficiency, a maximum aircraft parameters efficiency, and a maximum drag efficiency.

The process 500 presents graphical elements associated with the optimized operating procedure and the increased flight efficiency level as an advisory onboard the aircraft, via a display device communicatively coupled to the at least one processor (step 506). Here, the process 500 provides the flight crew with a visual representation of the determined optimized operating procedure for the landing lights, such that the flight crew is informed and can operate the landing lights to achieve increased flight efficiency. In some embodiments, the process 500 presents the graphical elements associated with the optimized operating procedure via a lateral profile display onboard the aircraft; wherein the lateral profile display is communicatively coupled to the at least one processor, and wherein the display device further comprises the lateral profile display. In some embodiments, the process 500 presents the graphical elements associated with the optimized operating procedure via a vertical profile display onboard the aircraft; wherein the vertical profile display is communicatively coupled to the at least one processor, and wherein the display device further comprises the vertical profile display. In exemplary embodiments, the process 500 may present the graphical elements using a combination display that includes both a vertical profile display and a lateral profile display, as described previously with regard to FIG. 4. The process 500 may present the graphical elements (including a vertical profile display, a lateral profile display, or a combination display) via at least one of an avionics display and an Electronic Flight Bag (EFB) application display provided by the computing device; wherein the display device comprises at least one of the avionics display and the EFB application display.

FIG. 6 is a flow chart that illustrates an embodiment of a process 600 for determining an optimized operating procedure for the landing lights to increase the flight efficiency level to achieve an increased flight efficiency level, in accordance with the disclosed embodiments. It should be appreciated that the process 600 described in FIG. 6 represents one embodiment of step 504 described above in the discussion of FIG. 5, including additional detail. First, the process 600 establishes communication connections to avionics systems onboard the aircraft and to one or more remote server systems, via a communication device communicatively coupled to the at least one processor (step 602). The communication connections may be any wired and/or wireless communication connections, as described previously with regard to FIGS. 1-2 (see data communication network 110 of FIG. 1 and communication device 208 of FIG. 2).

The process 600 then obtains a current aircraft trajectory and a current aircraft state, via the communication connections (step 604). Generally, the process 600 obtains the current aircraft trajectory and the current aircraft state from one or more aircraft onboard avionics devices, including a Flight Management System (FMS), a Communication Management System (CMS), a weather radar system, a Quick Access Recorder (QAR), and a Flight Data Recorder (FDR). The process 600 dynamically obtains the real-time contextual data during the flight, via the communication connections (step 606). The real-time contextual data comprises at least weather data, traffic data, visibility data, wind data, airport data, aircraft data, and Notices to Airmen (NOTAMs) associated with the current aircraft trajectory. Here, the process 600 continuously obtains the aircraft trajectory data and the aircraft state data, in real-time during the flight, for use in creating and updating a software-based performance model of the particular aircraft type.

The process 600 then creates a tail number-specific performance model of the aircraft, by the at least one processor (step 608). The tail number-specific performance model is a software-based model of the particular aircraft, as identified by a tail number or registration number used by civil aviation authorities. The tail number-specific performance model is created using the real-time contextual data, aircraft data, the current aircraft state, the current aircraft trajectory, and visibility requirements at a plurality of altitude levels of the current aircraft trajectory. The tail number-specific performance model is typically tail number-specific because the performance model directly depends on fuel and gross weight of the aircraft, which primarily defines the optimized operation of landing lights.

The process 600 calculates an optimal altitude value for operating the landing lights to achieve the increased flight efficiency level, based on the tail number-specific performance model, by the at least one processor (step 610). The optimal altitude value comprises a potential economic altitude value to operate the landing lights to achieve the increased flight efficiency level. The potential economic altitude value is referred to as "economic" because, at the potential economic altitude value, the flight efficiency factors are maximized to provide the greatest cost savings for fuel efficiency, aircraft parameter efficiency, and drag efficiency. An increased flight efficiency level produces a reduction in the drag force, which also reduces the fuel burn. A reduced drag force and a reduced fuel burn result in an increased cost efficiency to aircraft operators, including commercial airlines. The optimized operating procedure referenced previously (see step 504 of FIG. 5) includes operating the landing lights at the optimal altitude value.

Operation of the landing lights may include extension to activate the landing lights, or retraction to deactivate the landing lights. Generally, the standard operating procedure (SOP) referenced in step 502 of FIG. 5 indicates a typical, industry practice for safe operation of the landing lights during takeoff or landing. However, prolonged extension of the landing lights decreases flight efficiency by increasing drag and fuel burn, thereby decreasing fuel efficiency of the flight. Thus, it is beneficial to decrease the time period during which the landing lights are extended and activated. The process 600 determines an optimized operating procedure to increase the flight efficiency level, which includes calculating an optimal altitude value for operating the landing lights. In other words, the process 600 determines an altitude value for the aircraft at which the flight crew should extend or retract the landing lights in order to decrease the time period for extension of the landing lights.

During takeoff, the process 600 calculates an optimal altitude value for activating the landing lights. The process 600 obtains data associated with visibility and traffic, and provides a calculated altitude value for extending and activating the landing lights during takeoff, wherein the calculated value may be an altitude value that is higher than the typical altitude value for activating the landing lights, and therefore the aircraft keeps the landing lights deactivated for a longer period of time during takeoff. During landing, the process 600 calculates an optimal altitude value for deactivating the landing lights. Here, the aircraft has activated the landing lights at an altitude level recommended by the industry-accepted standard operating procedures (SOPs). The process 600 obtains data associated with visibility and traffic, and provides a calculated altitude value for retracting and deactivating the landing lights during landing. The calculated altitude value is an altitude value that is lower than the SOP-dictated altitude value for activating the landing lights, and therefore the aircraft deactivates the landing lights during a time period when the aircraft would usually leave the landing lights extended and activated. Therefore, the landing lights are extended for a shorter total period of time and drag and fuel burn parameters are therefore decreased.

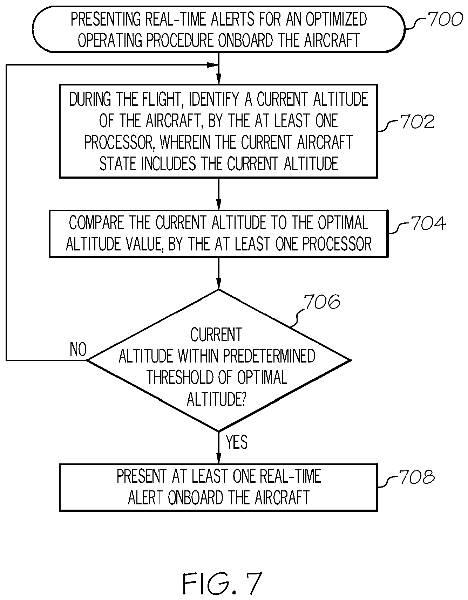

FIG. 7 is a flow chart that illustrates an embodiment of a process 700 for presenting real-time alerts for an optimized operating procedure onboard the aircraft, in accordance with the disclosed embodiments. During flight, the process 700 identifies a current altitude of the aircraft, by the at least one processor, wherein the current aircraft state includes the current altitude (step 702). The process 700 then compares the current altitude to the optimal altitude value, by the at least one processor (step 704) to determine whether action is required for performance by the flight crew, to modify operation of the landing lights. The predetermined threshold is a user-configurable parameter designating an altitude point at which the flight crew selects to receive an alert regarding activating the optimized landing light operation. The optimal altitude value is described previously with regard to FIGS. 5-6.

When the current altitude is not within a predetermined threshold of the optimal altitude (the "No" branch of 706), then the process 700 continues to monitor the current altitude of the aircraft (step 702). Here, the process 700 recognizes that the aircraft is not located at an altitude that is close enough to the optimal altitude value to require that the flight crew manually extend or retract the landing lights, to achieve a maximum flight efficiency. However, when the current altitude is within a predetermined threshold of the optimal altitude (the "Yes" branch of 706), then the process 700 presents at least one real-time alert onboard the aircraft (step 708). In step 708, the process 700 recognizes that the aircraft is located at an altitude that is close enough to the optimal altitude value to require that the flight crew manually extend or retract the landing lights, to achieve a maximum flight efficiency. Thus, the process 700 presents a real-time alert to notify the flight crew that the optimal altitude value is approaching. The real-time alerts may include visual alerts (e.g., flashing lights, text-based or graphical effects including color changes or highlighting), auditory alerts (e.g., voice-based speed alerts, alarms, auditory tones), or the like.

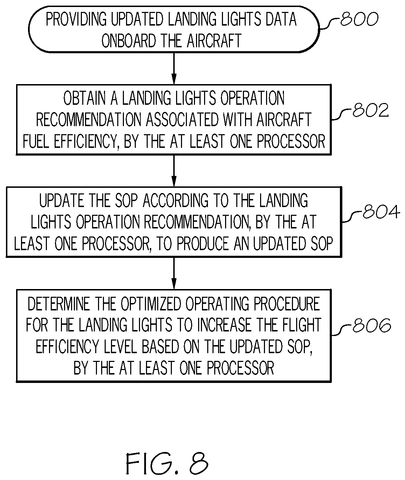

FIG. 8 is a flow chart that illustrates an embodiment of a process 800 for providing updated landing lights data onboard the aircraft, in accordance with the disclosed embodiments. It should be appreciated that the process 800 is an extension of the process 500 described previously with regard to FIG. 5. Thus, the process 800 continues to improve the landing lights optimization procedure to further increase an achievable flight efficiency level for a flight. First, the process 800 obtains a landing lights operation recommendation associated with aircraft fuel efficiency, by the at least one processor (step 802). Here, the process 800 obtains additional data that is not provided by the standard operating procedure (SOP), and the additional data includes a recommendation from an external source to adjust operation of the landing lights to achieve a fuel efficiency level that is a higher level of fuel efficiency than the typical fuel efficiency associated with the SOP.

The process 800 then updates the SOP according to the landing lights operation recommendation, to produce an updated SOP (step 804), and the process 800 determines the optimized operating procedure for the landing lights to increase the flight efficiency level based on the updated SOP, by the at least one processor (step 806). Here, the process 800 computes the optimized operating procedure using the updated SOP as the default landing lights procedure, instead of using the typical SOP as the default landing lights procedure. The default landing lights procedure is a starting point for calculating the optimized altitude value (previously described with regard to FIG. 6, reference 610), and is generally the SOP. In this scenario, however, the default landing lights procedure is the updated SOP. Thus, the optimized operating procedure is an altitude value that may be further from the typical, SOP-dictated altitude value for landing lights operation than the originally computed optimized altitude value described in FIG. 6. During takeoff operations, the process 800 receives required aircraft weight information (e.g., gross weight, fuel weight) via user input data or via data extraction from a data storage location onboard the aircraft (e.g., local system memory) or external to the aircraft (e.g., a remote server or database). After obtaining the required weight information, the process 800 initiates computes the optimized operating procedure to provide a recommended landing light retraction altitude. During landing operations, the process 800 determines that descent has been initiated, and the process 800 obtains aircraft parameter data that includes: the current aircraft state, the current flight plan, current atmospheric condition data, and airport information. Here, the process 800 uses the obtained aircraft parameter data to provide the recommended landing light extension altitude.

The various tasks performed in connection with processes 500-800 may be performed by software, hardware, firmware, or any combination thereof. For illustrative purposes, the preceding descriptions of processes 500-800 may refer to elements mentioned above in connection with FIGS. 1-4. In practice, portions of processes 500-800 may be performed by different elements of the described system. It should be appreciated that each of processes 500-800 may include any number of additional or alternative tasks, the tasks shown in FIGS. 5-8 need not be performed in the illustrated order, and processes 500-800 may be incorporated into a more comprehensive procedure or process having additional functionality not described in detail herein. Moreover, one or more of the tasks shown in FIGS. 5-8 could be omitted from embodiments of the processes 500-800 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The preceding description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A method for providing landing lights operation data during a flight of an aircraft, by a computing device comprising at least one processor and a system memory element, the method comprising:
obtaining a standard operating procedure (SOP) for operating landing lights onboard the aircraft during the flight, by the at least one processor, wherein the SOP comprises a customary industry-recommended practice for at least one of extension and retraction of the landing lights on the aircraft, and wherein execution of the SOP produces a flight efficiency level including at least fuel burn and drag parameters;
determining an optimized operating procedure for the landing lights to increase the flight efficiency level to achieve an increased flight efficiency level, by the at least one processor, based on real-time contextual data; and
presenting an advisory comprising at least graphical elements associated with the optimized operating procedure, a potential cost savings for the optimized operating procedure, and the increased flight efficiency level onboard the aircraft, via a display device communicatively coupled to the at least one processor.

2. The method of Claim 1, wherein determining the optimized operating procedure for the landing lights further comprises:
creating a tail number-specific performance model of the aircraft based on the real-time contextual data, aircraft data, a current aircraft state, a current aircraft trajectory, and visibility requirements at a plurality of altitude levels of the current aircraft trajectory, by the at least one processor; and
calculating an optimal altitude value for operating the landing lights to achieve the increased flight efficiency level, based on the tail number-specific performance model, by the at least one processor, wherein the optimized operating procedure comprises operating the landing lights at the optimal altitude value.

3. The method of Claim 2, further comprising:
establishing communication connections to avionics systems onboard the aircraft and to one or more remote servers, via a communication device communicatively coupled to the at least one processor;
obtaining the current aircraft trajectory and the current aircraft state, via the communication connections by the at least one processor; and
dynamically obtaining the real-time contextual data during the flight, via the communication connections by the at least one processor, wherein the real-time contextual data comprises at least weather data, traffic data, visibility data, wind data, airport data, aircraft information, and Notices to Airmen (NOTAMs) associated with the current aircraft trajectory;
continuously updating the tail number-specific performance model during the flight, using the real-time contextual data; and
continuously updating the optimal altitude value during the flight, using the tail number-specific performance model.

4. The method of Claim 2, further comprising:
during the flight, identifying a current altitude of the aircraft, by the at least one processor, wherein the current aircraft state includes the current altitude;
comparing the current altitude to the optimal altitude value, by the at least one processor; and
when the current altitude is within a predetermined threshold of the optimal altitude value, presenting at least one real-time alert onboard the aircraft, by the at least one processor.

5. The method of Claim 4, further comprising:
presenting an auditory alert associated with the optimal altitude value and potential fuel savings onboard the aircraft, by the at least one processor via a communicatively coupled audio device;
wherein the at least one real-time alert includes the auditory alert.

6. The method of Claim 4, further comprising:
presenting a visual alert associated with the optimal altitude value and potential fuel savings onboard the aircraft, by the at least one processor via the display device;
wherein the at least one real-time alert includes the visual alert.

7. The method of Claim 1, further comprising:
obtaining a landing lights operation recommendation associated with aircraft fuel efficiency, by the at least one processor;
updating the SOP according to the landing lights operation recommendation, by the at least one processor, to produce an updated SOP; and
determining the optimized operating procedure for the landing lights to increase the flight efficiency level based on the updated SOP, by the at least one processor.

8. The method of Claim 1, further comprising:
presenting the graphical elements associated with the optimized operating procedure via a lateral profile display onboard the aircraft;
wherein the lateral profile display is communicatively coupled to the at least one processor, and wherein the display device further comprises the lateral profile display.

9. The method of Claim 1, further comprising:
presenting the graphical elements associated with the optimized operating procedure via a vertical profile display onboard the aircraft;
wherein the vertical profile display is communicatively coupled to the at least one processor, and wherein the display device further comprises the vertical profile display.

10. The method of Claim 1, further comprising:
presenting the graphical elements via at least one of an avionics display and an Electronic Flight Bag (EFB) application display provided by the computing device;
wherein the display device comprises at least one of the avionics display and the EFB application display.

11. A computing device for providing landing lights operation data during a flight of an aircraft, the computing device comprising:
a system memory element;
a display device configured to present graphical elements and text onboard the aircraft; and
at least one processor communicatively coupled to the system memory element and the display device, the at least one processor configured to:
obtain a standard operating procedure (SOP) for operating landing lights onboard the aircraft during the flight, wherein the SOP comprises a customary industry-recommended practice for at least one of extension and retraction of the landing lights on the aircraft, and wherein execution of the SOP produces a flight efficiency level including at least fuel burn and drag parameters;
determine an optimized operating procedure for the landing lights to increase the flight efficiency level to achieve an increased flight efficiency level, based on real-time contextual data; and
present an advisory comprising at least graphical elements associated with the optimized operating procedure, a potential cost savings for the optimized operating procedure, and the increased flight efficiency level onboard the aircraft, via the display device.

12. The computing device of Claim 11, wherein the at least one processor is further configured to determine the optimized operating procedure, by:
creating a tail number-specific performance model of the aircraft based on the real-time contextual data, aircraft data, a current aircraft state, a current aircraft trajectory, and visibility requirements at a plurality of altitude levels of the current aircraft trajectory; and
calculating an optimal altitude value for operating the landing lights to achieve the increased flight efficiency level, based on the tail number-specific performance model, wherein the optimized operating procedure comprises operating the landing lights at the optimal altitude value.

13. The computing device of Claim 12, further comprising a communication device communicatively coupled to the at least one processor, the communication device configured to establish communication connections to avionics systems onboard the aircraft and to one or more remote servers;
wherein the at least one processor is further configured to:
obtain the current aircraft trajectory and the current aircraft state, via the communication connections; and
dynamically obtain the real-time contextual data during the flight, via the communication connections, wherein the real-time contextual data comprises at least weather data, traffic data, visibility data, wind data, airport data, aircraft information, and Notices to Airmen (NOTAMs) associated with the current aircraft trajectory;
continuously update the tail number-specific performance model during the flight, using the real-time contextual data; and
continuously update the optimal altitude value during the flight, using the tail number-specific performance model.

14. The computing device of Claim 12, wherein the at least one processor is further configured to:
during the flight, identify a current altitude of the aircraft, wherein the current aircraft state includes the current altitude;
compare the current altitude to the optimal altitude value; and
when the current altitude is within a predetermined threshold of the optimal altitude value, present at least one real-time alert onboard the aircraft.

15. The computing device of Claim 11, wherein the at least one processor is further configured to:
obtain a landing lights operation recommendation associated with aircraft fuel efficiency;
update the SOP according to the landing lights operation recommendation, to produce an updated SOP; and
determine the optimized operating procedure for the landing lights to increase the flight efficiency level based on the updated SOP.

## Patentansprüche

1. Verfahren zum Bereitstellen von Betriebsdaten von Landelichtern während eines Fluges eines Flugzeugs durch eine Rechenvorrichtung, die mindestens einen Prozessor und ein Systemspeicherelement umfasst, wobei das Verfahren umfasst:
Erhalten eines Standardbetriebsverfahrens (SOP) zum Betreiben von Landelichtern an Bord des Flugzeugs während des Flugs durch den mindestens einen Prozessor, wobei das SOP eine übliche, in der Industrie empfohlene Praxis für mindestens eines von Ausfahren und Einfahren der Landelichter an dem Flugzeug umfasst, und wobei die Ausführung des SOP ein Flugeffizienzniveau erzeugt, das mindestens Treibstoffverbrauchs- und Widerstandsparameter einschließt;
Bestimmen eines optimierten Betriebsverfahrens für die Landelichter, um das Flugeffizienzniveau zu erhöhen, um ein höheres Flugeffizienzniveau zu erreichen, durch den mindestens einen Prozessor, basierend auf Echtzeit-Kontextdaten; und
Darstellen eines Hinweises, der mindestens grafische Elemente umfasst, die mit dem optimierten Betriebsverfahren, einer potenziellen Kosteneinsparung für das optimierte Betriebsverfahren und dem höheren Flugeffizienzniveau an Bord des Flugzeugs verbunden sind, über eine Anzeigevorrichtung, die kommunikativ mit dem mindestens einen Prozessor gekoppelt ist.

2. Verfahren nach Anspruch 1, wobei das Bestimmen des optimierten Betriebsverfahrens für die Landelichter ferner umfasst:
Erzeugen eines Hecknummern-spezifischen Leistungsmodells des Flugzeugs basierend auf den Echtzeit-Kontextdaten, Flugzeugdaten, einem aktuellen Flugzeugzustand, einer aktuellen Flugzeugtrajektorie und Sichtweitenanforderungen auf einer Vielzahl von Höhenniveaus der aktuellen Flugzeugtrajektorie, durch den mindestens einen Prozessor; und
Berechnen eines optimalen Höhenwerts für den Betrieb der Landelichter zum Erreichen des erhöhten Flugeffizienzniveaus, basierend auf dem Hecknummern-spezifischen Leistungsmodell, durch den mindestens einen Prozessor, wobei das optimierte Betriebsverfahren den Betrieb der Landelichter bei dem optimalen Höhenwert umfasst.

3. Verfahren nach Anspruch 2, ferner umfassend:
Herstellen von Kommunikationsverbindungen zu Avioniksystemen an Bord des Flugzeugs und zu einem oder mehreren entfernten Servern mittels einer Kommunikationsvorrichtung, die kommunikativ mit dem mindestens einen Prozessor gekoppelt ist;
Erhalten der aktuellen Flugzeugtrajektorie und des aktuellen Flugzeugzustands mittels der Kommunikationsverbindungen durch den mindestens einen Prozessor; und
dynamisches Erhalten der Echtzeit-Kontextdaten während des Flugs mittels der Kommunikationsverbindungen durch den mindestens einen Prozessor, wobei die Echtzeit-Kontextdaten mindestens Wetterdaten, Verkehrsdaten, Sichtweitendaten, Winddaten, Flughafendaten, Flugzeuginformationen und Notices to Airmen (NOTAMs) umfassen, die mit der aktuellen Flugzeugtrajektorie verbunden sind;
kontinuierliches Aktualisieren des Hecknummern-spezifischen Leistungsmodells während des Fluges, unter Verwendung der Echtzeit-Kontextdaten; und
kontinuierliches Aktualisieren des optimalen Höhenwertes während des Flugs unter Verwendung des Hecknummern-spezifischen Leistungsmodells.

4. Verfahren nach Anspruch 2, ferner umfassend:
Identifizieren einer aktuellen Höhe des Flugzeugs während des Flugs, durch den mindestens einen Prozessor, wobei der aktuelle Flugzeugzustand die aktuelle Höhe einschließt;
Vergleichen der aktuellen Höhe mit dem optimalen Höhenwert, durch den mindestens einen Prozessor; und
wenn die aktuelle Höhe innerhalb eines vorbestimmten Schwellenwerts des optimalen Höhenwerts liegt, Darstellen mindestens einer Echtzeitwarnung an Bord des Flugzeugs durch den mindestens einen Prozessor.

5. Verfahren nach Anspruch 4, ferner umfassend:
Darstellen einer akustischen Warnung, die mit dem optimalen Höhenwert und der potenziellen Treibstoffeinsparung verbunden ist, an Bord des Flugzeugs durch den mindestens einen Prozessor mittels einer kommunikativ gekoppelten Audiovorrichtung;
wobei die mindestens eine Echtzeitwarnung die akustische Warnung einschließt.

6. Verfahren nach Anspruch 4, ferner umfassend:
Darstellen einer visuellen Warnung, die mit dem optimalen Höhenwert und der potenziellen Treibstoffeinsparung verbunden ist, an Bord des Flugzeugs durch den mindestens einen Prozessor mittels der Anzeigevorrichtung;
wobei die mindestens eine Echtzeitwarnung die visuelle Warnung einschließt.

7. Verfahren nach Anspruch 1, ferner umfassend:
Erhalten einer Landelichtbetriebsempfehlung, die mit der Treibstoffeffizienz des Flugzeugs verbunden ist, durch den mindestens einen Prozessor;
Aktualisieren des SOP gemäß der Landelichtbetriebsempfehlung durch den mindestens einen Prozessor, um ein aktualisiertes SOP zu erzeugen; und
Bestimmen des optimierten Betriebsverfahrens für die Landelichter zur Erhöhung des Flugeffizienzniveaus basierend auf dem aktualisierten SOP durch den mindestens einen Prozessor.

8. Verfahren nach Anspruch 1, ferner umfassend:
Darstellen der grafischen Elemente, die mit dem optimierten Betriebsverfahren verbunden sind, mittels einer seitlichen Profilanzeige an Bord des Flugzeugs;
wobei die seitliche Profilanzeige kommunikativ mit dem mindestens einen Prozessor gekoppelt ist, und wobei die Anzeigevorrichtung ferner die seitliche Profilanzeige umfasst.

9. Verfahren nach Anspruch 1, ferner umfassend:
Darstellen der grafischen Elemente, die mit dem optimierten Betriebsverfahren verbunden sind, mittels einer vertikalen Profilanzeige an Bord des Flugzeugs;
wobei die vertikale Profilanzeige kommunikativ mit dem mindestens einen Prozessor gekoppelt ist, und wobei die Anzeigevorrichtung ferner die vertikale Profilanzeige umfasst.

10. Verfahren nach Anspruch 1, ferner umfassend:
Darstellen der grafischen Elemente mittels mindestens eines Avionikdisplays und eines Electronic Flight Bag (EFB)-Anwendungsdisplays, das von der Rechenvorrichtung bereitgestellt wird;
wobei die Anzeigevorrichtung mindestens eines von dem Avionikdisplay und dem EFB-Anwendungsdisplay umfasst.

11. Rechenvorrichtung zum Bereitstellen von Betriebsdaten für Landelichter während eines Flugs eines Flugzeugs, wobei die Rechenvorrichtung umfasst:
ein Systemspeicherelement;
eine Anzeigevorrichtung, die so konfiguriert ist, dass sie grafische Elemente und Text an Bord des Flugzeugs darstellt; und
mindestens einen Prozessor, der kommunikativ mit dem Systemspeicherelement und der Kommunikationsvorrichtung gekoppelt ist, wobei der mindestens eine Prozessor konfiguriert ist zum:
Erhalten eines Standardbetriebsverfahrens (SOP) zum Betreiben von Landelichtern an Bord des Flugzeugs während des Flugs, wobei das SOP eine übliche, in der Industrie empfohlene Praxis für mindestens eines von Ausfahren und Einfahren der Landelichter an dem Flugzeug umfasst, und wobei die Ausführung des SOP ein Flugeffizienzniveau erzeugt, das mindestens Treibstoffverbrauchs- und Widerstandsparameter einschließt;
Bestimmen eines optimierten Betriebsverfahrens für die Landelichter, um das Flugeffizienzniveau zu erhöhen, um ein höheres Flugeffizienzniveau zu erreichen, basierend auf Echtzeit-Kontextdaten; und
Darstellen eines Hinweises, der mindestens grafische Elemente umfasst, die mit dem optimierten Betriebsverfahren, einer potenziellen Kosteneinsparung für das optimierte Betriebsverfahren und dem höheren Flugeffizienzniveau an Bord des Flugzeugs verbunden sind, mittels der Anzeigevorrichtung.

12. Rechenvorrichtung nach Anspruch 11, wobei der mindestens eine Prozessor ferner konfiguriert ist, um das optimierte Betriebsverfahren zu bestimmen, durch:
Erzeugen eines Hecknummern-spezifischen Leistungsmodells des Flugzeugs basierend auf den Echtzeit-Kontextdaten, Flugzeugdaten, einem aktuellen Flugzeugzustand, einer aktuellen Flugzeugtrajektorie und Sichtweitenanforderungen auf einer Vielzahl von Höhenniveaus der aktuellen Flugzeugtrajektorie; und
Berechnen eines optimalen Höhenwerts für den Betrieb der Landelichter zum Erreichen des höheren Flugeffizienzniveaus, basierend auf dem Hecknummern-spezifischen Leistungsmodell, wobei das optimierte Betriebsverfahren den Betrieb der Landelichter bei dem optimalen Höhenwert umfasst.

13. Rechenvorrichtung nach Anspruch 12, ferner umfassend eine Kommunikationsvorrichtung, die kommunikativ mit dem mindestens einen Prozessor gekoppelt ist, wobei die Kommunikationsvorrichtung konfiguriert ist, um Kommunikationsverbindungen zu Avioniksystemen an Bord des Flugzeugs und zu einem oder mehreren entfernten Servern herzustellen;
wobei der mindestens eine Prozessor ferner konfiguriert ist zum:
Erhalten der aktuellen Flugzeugtrajektorie und des aktuellen Flugzeugzustands mittels der Kommunikationsverbindungen; und
dynamischen Erhalten der Echtzeit-Kontextdaten während des Flugs mittels der Kommunikationsverbindungen, wobei die Echtzeit-Kontextdaten mindestens Wetterdaten, Verkehrsdaten, Sichtweitendaten, Winddaten, Flughafendaten, Flugzeuginformationen und Notices to Airmen (NOTAMs) umfassen, die mit der aktuellen Flugzeugtrajektorie verbunden sind;
kontinuierlichen Aktualisieren des Hecknummern-spezifischen Leistungsmodells während des Fluges, unter Verwendung der Echtzeit-Kontextdaten; und
kontinuierlichen Aktualisieren des optimalen Höhenwertes während des Flugs unter Verwendung des Hecknummern-spezifischen Leistungsmodells.

14. Rechenvorrichtung nach Anspruch 12, wobei der mindestens eine Prozessor ferner konfiguriert ist zum:
Identifizieren einer aktuellen Höhe des Flugzeugs während des Flugs, wobei der aktuelle Flugzeugzustand die aktuelle Höhe einschließt;
Vergleichen der aktuellen Höhe mit dem optimalen Höhenwert; und
wenn die aktuelle Höhe innerhalb eines vorbestimmten Schwellenwerts des optimalen Höhenwerts liegt, Darstellen mindestens einer Echtzeitwarnung an Bord des Flugzeugs.

15. Rechenvorrichtung nach Anspruch 11, wobei der mindestens eine Prozessor ferner konfiguriert ist zum:
Erhalten einer Landelichtbetriebsempfehlung, die mit der Treibstoffeffizienz des Flugzeugs verbunden ist;
Aktualisieren des SOP gemäß der Landelichtbetriebsempfehlung, um ein aktualisiertes SOP zu erzeugen; und
Bestimmen des optimierten Betriebsverfahrens für die Landelichter zur Erhöhung des Flugeffizienzniveaus basierend auf dem aktualisierten SOP.

## Revendications

1. Procédé pour fournir des données de fonctionnement de feux d'atterrissage pendant un vol d'aéronef, par un dispositif informatique comprenant au moins un processeur et un élément de mémoire système, le procédé comprenant :
l'obtention d'une procédure d'exploitation normalisée (SOP) pour faire fonctionner les feux d'atterrissage à bord de l'aéronef pendant le vol, par l'au moins un processeur, la SOP comprenant une pratique courante recommandée par l'industrie pour un déploiement et/ou une rétraction des feux d'atterrissage sur l'aéronef, et l'exécution de la SOP produisant un niveau d'efficacité de vol comprenant au moins des paramètres de consommation de carburant et de traînée ;
la détermination d'une procédure d'exploitation optimisée pour les feux d'atterrissage pour augmenter le niveau d'efficacité de vol pour atteindre un niveau d'efficacité de vol accru, par l'au moins un processeur, sur la base de données contextuelles en temps réel ; et
la présentation d'un avis comprenant au moins des éléments graphiques associés à la procédure d'exploitation optimisée, aux économies de coûts potentielles pour la procédure d'exploitation optimisée, et au niveau d'efficacité de vol accru à bord de l'aéronef, par l'intermédiaire d'un dispositif d'affichage couplé en communication avec l'au moins un processeur.

2. Procédé selon la revendication 1, dans lequel la détermination de la procédure d'exploitation optimisée pour les feux d'atterrissage comprend en outre :
la création d'un modèle de performance spécifique au suffixe de l'aéronef sur la base des données contextuelles en temps réel, des données d'aéronef, d'un état courant de l'aéronef, d'une trajectoire courante de l'aéronef et des exigences de visibilité à une pluralité de niveaux d'altitude de la trajectoire courante de l'aéronef, par l'au moins un processeur ; et
le calcul d'une valeur d'altitude optimale pour faire fonctionner les feux d'atterrissage pour atteindre le niveau d'efficacité de vol accru, sur la base du modèle de performance spécifique au suffixe numérique, par l'au moins un processeur, la procédure d'exploitation optimisée comprenant le fonctionnement des feux d'atterrissage à la valeur d'altitude optimale.

3. Procédé selon la revendication 2, comprenant en outre :
l'établissement de connexions de communication avec des systèmes avioniques à bord de l'aéronef et avec un ou plusieurs serveurs distants, par l'intermédiaire d'un dispositif de communication couplé en communication avec l'au moins un processeur ;
l'obtention de la trajectoire courante de l'aéronef et de l'état courant de l'aéronef, par l'intermédiaire des connexions de communication par l'au moins un processeur ; et
l'obtention dynamique des données contextuelles en temps réel pendant le vol, par l'intermédiaire des connexions de communication par l'au moins un processeur, les données contextuelles en temps réel comprenant au moins des données météorologiques, des données de trafic, des données de visibilité, des données de vent, des données d'aéroport, des informations d'aéronef, et les avis aux aviateurs (NOTAM) associés à la trajectoire courante de l'aéronef ;
la mise à jour continue du modèle de performance spécifique au suffixe numérique pendant le vol, au moyen des données contextuelles en temps réel ; et
la mise à jour continue de la valeur d'altitude optimale pendant le vol, au moyen du modèle de performance spécifique au suffixe numérique.

4. Procédé selon la revendication 2, comprenant en outre :
pendant le vol, l'identification d'une altitude courante de l'aéronef, par l'au moins un processeur, dans lequel l'état courant de l'aéronef comprend l'altitude courante ;
la comparaison de l'altitude courante à la valeur d'altitude optimale, par l'au moins un processeur ; et
lorsque l'altitude courante est dans un seuil prédéterminé de la valeur d'altitude optimale, la présentation d'au moins une alerte en temps réel à bord de l'aéronef, par l'au moins un processeur.

5. Procédé selon la revendication 4, comprenant en outre :
la présentation d'une alerte auditive associée à la valeur d'altitude optimale et aux économies potentielles de carburant à bord de l'aéronef, par l'au moins un processeur par l'intermédiaire d'un dispositif audio couplé en communication ;
l'au moins une alerte en temps réel comprenant l'alerte auditive.

6. Procédé selon la revendication 4, comprenant en outre :
la présentation d'une alerte visuelle associée à la valeur d'altitude optimale et aux économies potentielles de carburant à bord de l'aéronef, par l'au moins un processeur par l'intermédiaire du dispositif d'affichage ;
l'au moins une alerte en temps réel comprenant l'alerte visuelle.

7. Procédé selon la revendication 1, comprenant en outre :
l'obtention d'une recommandation de fonctionnement des feux d'atterrissage associée à l'efficacité énergétique de l'aéronef, par l'au moins un processeur ;
la mise à jour de la SOP selon la recommandation de fonctionnement des feux d'atterrissage, par l'au moins un processeur, pour produire une SOP mise à jour ; et
la détermination de la procédure d'exploitation optimisée pour les feux d'atterrissage pour augmenter le niveau d'efficacité de vol sur la base de la SOP mise à jour, par l'au moins un processeur.

8. Procédé selon la revendication 1, comprenant en outre :
la présentation des éléments graphiques associés à la procédure d'exploitation optimisée par l'intermédiaire d'un affichage de profil latéral à bord de l'aéronef ;
l'affichage de profil latéral étant couplé en communication avec l'au moins un processeur, et le dispositif d'affichage comprenant en outre l'affichage de profil latéral.

9. Procédé selon la revendication 1, comprenant en outre :
la présentation des éléments graphiques associés à la procédure d'exploitation optimisée par un affichage de profil vertical à bord de l'aéronef ;
l'affichage de profil vertical étant couplé en communication au au moins un processeur, et le dispositif d'affichage comprenant en outre l'affichage de profil vertical.

10. Procédé selon la revendication 1, comprenant en outre :
la présentation des éléments graphiques par l'intermédiaire d'un affichage avionique et/ou d'un affichage d'application de sacoche électronique de vol (EFB) fournis par le dispositif informatique ;
le dispositif d'affichage comprenant l'affichage avionique et/ou l'affichage d'application EFB.

11. Dispositif informatique pour fournir des données de fonctionnement des feux d'atterrissage pendant un vol d'un aéronef, le dispositif informatique comprenant :
un élément de mémoire système ;
un dispositif d'affichage conçu pour présenter des éléments graphiques et du texte à bord de l'aéronef ; et
au moins un processeur couplé en communication avec l'élément de mémoire système et le dispositif d'affichage, l'au moins un processeur étant configuré pour :
obtenir une procédure d'exploitation normalisée (SOP) pour faire fonctionner les feux d'atterrissage à bord de l'aéronef pendant le vol, la SOP comprenant une pratique courante recommandée par l'industrie pour un déploiement et/ou une rétraction des feux d'atterrissage sur l'aéronef, et l'exécution de la SOP produisant un niveau d'efficacité de vol comprenant au moins des paramètres de consommation de carburant et de traînée ;
la détermination d'une procédure d'exploitation optimisée pour les feux d'atterrissage afin d'augmenter le niveau d'efficacité de vol pour atteindre un niveau d'efficacité de vol accru, sur la base de données contextuelles en temps réel ; et
la présentation d'un avis comprenant au moins des éléments graphiques associés à la procédure d'exploitation optimisée, aux économies potentielles de coûts pour la procédure d'exploitation optimisée, et au niveau d'efficacité de vol accru à bord de l'aéronef, par l'intermédiaire du dispositif d'affichage.

12. Dispositif informatique selon la revendication 11, dans lequel l'au moins un processeur est en outre configuré pour déterminer la procédure d'exploitation optimisée, par :
création d'un modèle de performance spécifique au suffixe numérique sur la base des données contextuelles en temps réel, des données de l'aéronef, d'un état courant de l'aéronef, d'une trajectoire courante de l'aéronef et des exigences de visibilité à une pluralité de niveaux d'altitude de la trajectoire courante de l'aéronef ; et
le calcul d'une valeur d'altitude optimale pour faire fonctionner les feux d'atterrissage pour atteindre le niveau d'efficacité de vol accru, sur la base du modèle de performance spécifique au suffixe numérique, la procédure d'exploitation optimisée comprenant le fonctionnement des feux d'atterrissage à la valeur d'altitude optimale.

13. Dispositif informatique selon la revendication 12, comprenant en outre un dispositif de communication couplé en communication avec l'au moins un processeur, le dispositif de communication étant conçu pour établir des connexions de communication avec des systèmes avioniques à bord de l'aéronef et avec un ou plusieurs serveurs distants ;
l'au moins un processeur étant en outre configuré pour :
obtenir la trajectoire courante de l'aéronef et l'état courant de l'aéronef, par l'intermédiaire des connexions de communication ; et
obtenir dynamiquement les données contextuelles en temps réel pendant le vol, par l'intermédiaire des connexions de communication, les données contextuelles en temps réel comprenant au moins des données météorologiques, des données de trafic, des données de visibilité, des données de vent, des données d'aéroport, des informations d'aéronef et des avis aux aviateurs (NOTAM) associés à la trajectoire courante de l'aéronef ;
mettre à jour en continu le modèle de performance spécifique au suffixe numérique pendant le vol, au moyen des données contextuelles en temps réel ; et
mettre à jour en continu la valeur d'altitude optimale pendant le vol, au moyen du modèle de performance spécifique au suffixe numérique.

14. Dispositif informatique selon la revendication 12, l'au moins un processeur étant en outre configuré pour :
pendant le vol, identifier une altitude courante de l'aéronef, l'état courant de l'aéronef comprenant l'altitude courante ;
comparer l'altitude courante à la valeur d'altitude optimale ; et
lorsque l'altitude courante est dans un seuil prédéterminé de la valeur d'altitude optimale, présenter au moins une alerte en temps réel à bord de l'aéronef.

15. Dispositif informatique selon la revendication 11, l'au moins un processeur étant en outre configuré pour :
obtenir une recommandation de fonctionnement des feux d'atterrissage associée à l'efficacité énergétique de l'aéronef ;
mettre à jour la SOP conformément à la recommandation de fonctionnement des feux d'atterrissage, pour produire une SOP mise à jour ; et
déterminer la procédure d'exploitation optimisée pour les feux d'atterrissage afin d'augmenter le niveau d'efficacité de vol en fonction de la SOP mise à jour.
